# FASCICULE DE BREVET EUROPEEN

(11) **EP 1 224 636 B1**
(45) Date de publication et mention de la délivrance du brevet: **13.08.2003**
(21) Numéro de dépôt: 00971496.5
(22) Date de dépôt: 25.10.2000
(51) Int. Cl.: G07F 7/10

(54) **PROCEDE DE TRANSACTION ELECTRONIQUE SECURISEE ET SYSTEME CORRESPONDANT**
GESICHERTES VERFAHREN FÜR ELEKTRONISCHE ÜBERWEISUNGEN UND DAZUGEHÖRIGES SYSTEM
METHOD FOR SECURE ELECTRONIC TRANSACTION AND CORRESPONDING SYSTEM

(30) Priorité: 26.10.1999 FR 9913343
(43) Date de publication de la demande: 24.07.2002
(73) Titulaire: FRANCE TELECOM, 75015 Paris (FR)
(72) Inventeur: REMERY, Patrick, F-14000 Caen (FR); TRAORE, Jacques, F-61100 Flers (FR)
(74) Mandataire: Poulin, Gérard
(86) Numéro de dépôt international: FR0002964
(87) Numéro de publication internationale: WO01031596

(56) Documents cités:
- EP-A- 0 231 702
- EP-A- 0 496 656
- EP-A- 0 588 339
- EP-A- 0 621 570
- EP-A- 0 671 712
- WO-A-91/16691
- DE-A- 4 119 924
- DE-A- 19 718 547

## Description

### Domaine technique

La présente invention a pour objet un procédé de transaction électronique sécurisée et un système correspondant.

L'invention trouve une application particulière dans le paiement électronique. Elle met alors en oeuvre un support appelé porte-monnaie électronique, qui peut être au format d'une carte de crédit, avec ou sans contact. Mais tout autre objet ou support peut être utilisé (montre, téléphone mobile, etc...)

### Etat de la technique antérieure

Le porte-monnaie électronique est un moyen de paiement destiné aux transactions de faible montant, souvent effectuées à distance. Il peut s'agir, par exemple, de transactions dans des secteurs comme la distribution automatique (boissons, journaux, ...), les transports en commun (métro, bus, ...), les réseaux de communication (téléphone mobile, publiphone, Internet, ...), la diffusion de programmes de télévision à péage (décodeur), etc...

La sécurité de ces transactions est obtenue par des techniques classiques en sécurité informatique reposant sur des fonctions cryptographiques servant à calculer et vérifier la preuve du débit du porte-monnaie électronique.

Les algorithmes cryptographiques de type symétrique sont largement utilisés, en particulier dans le domaine des composants à carte, car ils sont faciles à mettre en oeuvre.

La même clé secrète doit être partagée entre le porte-monnaie électronique, qui produit la preuve du débit et le terminal qui vérifie cette preuve. Le terminal ne pouvant mémoriser les clés secrètes de tous les porte-monnaie électroniques, possède en fait une seule clé de base, mère de toutes les clés filles (dites aussi clés diversifiées) introduites dans les porte-monnaie électroniques.

La même clé doit donc être connue de tous les terminaux, ce qui peut poser des problèmes de sécurité. Une solution connue consiste à multiplier le nombre de clés de base, chaque porte-monnaie électronique ayant les clés filles des différentes clés de base, lesquelles sont dispersées aléatoirement dans les terminaux. Cependant, la capacité limitée des mémoires des composants utilisés dans les porte-monnaie électroniques (quelques kilo-octets), ne permet pas de stocker un grand nombre de clés. Si, par exemple, le système comprend une dizaine de clés de base, la découverte d'une seule clé affaiblit la sécurité d'un dixième.

La présente invention a justement pour but de remédier à ces inconvénients.

Un premier document de l'art connu, EP-A-0 496 656, décrit un procédé d'échange de droits entre cartes à microprocesseur fondé sur un système à clés multiples diversifiées, dans lequel la clé utilisée pour constituer le certificat est obtenue à partir d'une des clés d'un ensemble, cette clé étant diversifiée en fonction de l'identité de la carte à créditer.

Un second document de l'art connu, EP-A-0 671 712, décrit un procédé pour authentifier un support de données comme émanant bien d'un organisme habilité, ce support étant destiné à effectuer des transactions ou à permettre l'accès à un service ou à un lieu auprès d'un distributeur affilié audit organisme, l'organisme détenant, dans un fichier, le contenu des droits actuels attachés à chaque support ce procédé consiste à attribuer audit support un numéro propre permettant de le distinguer parmi un ensemble de supports produits par ledit organisme, et à porter ce numéro sur le support.

### Exposé de l'invention

Le procédé de l'invention consiste à combiner des dispositions relevant de la cryptographie à clé secrète et des dispositions relevant de la cryptographie à clé publique. Pour ces dernières, l'invention utilise une valeur d'authentification, qui est une signature numérique portant sur un identifiant lié à l'objet à débiter. Cet identifiant peut être, par exemple, l'identité de l'objet, identité qui permet par ailleurs le calcul de la clé fille. D'autres informations comme, par exemple, les dates de début et de fin de validité de l'objet peuvent être associées à l'identité.

La valeur d'authentification et la clé fille (ou diversifiée) sont calculées et introduites dans les objets par l'autorité qui les gère, avant toute transaction, à la personnalisation des supports.

La valeur d'authentification est lue dans l'objet et vérifiée, en plus de la preuve du débit, à chaque transaction par le terminal, lequel possède la clé publique correspondant à la clé privée utilisée pour produire la valeur d'authentification. La preuve du débit ne sera reconnue que si le diversifiant est authentifié grâce à la valeur d'authentification, et s'il permet de vérifier, après diversification de la clé de base, le cryptogramme de la preuve du débit calculé par l'objet.

Si l'une des clés bases venait à être découverte, le système ne serait pas pour autant compromis car il faudrait, en plus, extraire de différents objets un grand nombre de valeurs d'authentification. De plus, introduire un objet frauduleux dans le système nécessiterait l'obtention d'une valeur d'authentification relative à ce nouvel objet. Or, une telle valeur ne peut être obtenue sans la connaissance de la clé privée de l'autorité gérant les objets. Une fraude massive requérait donc, en plus de la connaissance de la clé de base, celle de la clé privée de l'émetteur des objets.

L'invention présente donc un caractère "hybride" apportant un compromis intéressant entre les performances (rapidité d'exécution) et la sécurité. Cette solution hybride apporte les avantages des deux types de cryptographies sans en avoir les inconvénients ; en effet, on ne retient, pour les transactions en temps réel que la vérification avec la clé publique de la valeur d'authentification, car cette vérification est plus rapide à exécuter que le calcul lui-même de cette valeur d'authentification qui est effectué une seule fois lors de la création de la carte et plus du tout par la suite lors des transactions. Il s'agit en quelque sorte d'ajouter une deuxième authentification à clé publique en plus d'une authentification à clé secrète. On peut parler de "sur-sécurité", ce qui n'est pas trivial pour un domaine (le porte-monnaie électronique) où les performances sont une contrainte forte. Cette sur-sécurité n'entame pas trop les performances du système de sorte qu'on peut parler de solution optimale en termes de sécurité et de performances.

De façon plus précise, l'invention a pour objet un procédé de transaction électronique sécurisée entre un objet (O) à débiter d'un certain montant (M) et un terminal (T) apte à commander ce débit et à vérifier que ce débit a bien été effectué, ce procédé étant caractérisé en ce que :
A) avant toute transaction :
   - pour chaque objet défini par un certain identifiant (i), on calcule une valeur d'authentification (VA) qui est une signature numérique portant sur un identifiant de l'objet (i), cette signature étant produite en utilisant une clé privée (S_{AUT}) et pouvant être vérifiée à partir d'une clé publique (P_{AUT}) et on introduit ensuite cette valeur d'authentification (VA) dans l'objet (O),
   - on introduit dans chaque terminal (T) la clé publique d'authentification (P_{AUT}),
   - pour chaque objet (0) on détermine une clé diversifiée (kᵢ) à partir d'une clé de base (KM), en appliquant à l'identifiant (i) de l'objet un algorithme de diversification (f_{KM}) utilisant la clé de base, et l'on introduit cette clé diversifiée (kᵢ) dans l'objet (O),
B) pour chaque transaction :
   - l'objet à débiter (O) transmet au terminal (T) son identifiant (i) et la valeur d'authentification (VA),
   - le terminal (T) vérifie cette signature (VA) en utilisant la clé publique (P_{AUT}),
   - le terminal (T) transmet à l'objet (0) le montant et les paramètres de la transaction (M,j,n),
   - l'objet (0) se débite dudit montant (M) et calcule une preuve de ce débit par une fonction cryptographique (F_{kᵢ}) ayant comme clé secrète sa clé diversifiée (kᵢ) et appliquée au montant (M) et aux paramètres de la transaction et transmet cette preuve (F_{kᵢ}(M,j,n)) au terminal (T),
   - le terminal (T) calcule la clé diversifiée de l'objet (kᵢ) par une fonction cryptographique (f_{KM}) utilisant comme clé secrète la clé de base (KM) et appliquée à l'identifiant (i) de l'objet (O) (kᵢ=f_{KM}(i)), et vérifie la preuve du débit (F_{kᵢ}(M,j,n)) à l'aide de cette clé diversifiée.

De préférence, l'identifiant (i) utilisé pour calculer la valeur d'authentification (VA) comprend notamment un numéro d'identification et éventuellement une période de validité (début et/ou fin).

Dans une application particulière, l'objet est un support du type porte-monnaie électronique, la transaction étant un paiement électronique.

La demande a également pour objet un système de transaction électronique sécurisée comprenant un objet à débiter d'un certain montant et un terminal apte à commander ce débit et à vérifier que ce débit a bien été effectué, ce système étant caractérisé en ce que :
- chaque objet est défini par un certain identifiant, et contient une valeur d'authentification qui est une signature numérique portant sur l'identifiant de l'objet, cette signature étant produite en utilisant une clé privée et pouvant être vérifiée à partir d'une clé publique,
- chaque terminal contient la clé publique d'authentification,
- chaque objet contient une clé diversifiée obtenue à partir d'une clé de base en appliquant à l'identifiant de l'objet un algorithme de diversification utilisant la clé de base,
- l'objet à débiter contient des moyens aptes à transmettre au terminal son identifiant et la valeur d'authentification,
- le terminal contient des moyens aptes à effectuer un calcul cryptographique appliqué à la valeur d'authentification en utilisant la clé publique d'authentification,
- le terminal contient des moyens aptes à transmettre à l'objet le montant et les paramètres de la transaction,
- l'objet contient des moyens aptes à débiter l'objet dudit montant et à calculer une preuve de ce débit par une fonction cryptographique ayant comme clé secrète sa clé diversifiée et appliquée au montant et aux paramètres de la transaction et à transmettre cette preuve au terminal,
- le terminal contient des moyens aptes à calculer la clé diversifiée de l'objet par une fonction cryptographique utilisant comme clé secrète la clé de base et appliquée à l'identifiant de l'objet et à vérifier la preuve du débit à l'aide de cette clé diversifiée.

### Description de modes particuliers de mise en oeuvre

Dans la description qui va suivre, on supposera que l'objet participant à la transaction est un porte-monnaie électronique, la transaction étant alors un paiement électronique. Mais cet exemple n'est en rien limitatif. On peut aussi bien mettre en oeuvre l'invention pour débiter des points de fidélité, des unités téléphoniques, etc...

On note "PME" le porte-monnaie électronique et "T" le terminal. Par ailleurs :
- i est l'identifiant du PME (identité, début et fin de validité, etc...)
- VA est la valeur d'authentification ; VA est une signature numérique calculée à la personnalisation de la carte, à partir d'une clé privée S_{AUT}, qui est la clé privée de l'autorité gérant les PME,
- P_{AUT} est la clé publique de l'autorité ; elle est introduite dans les terminaux pour authentifier les identités des PME ; on a donc par hypothèse VA=S_{AUT}(i) et P_{AUT}(VA,i)=oui,
- F, f sont deux fonctions cryptographiques à clés secrètes,
- j est l'identifiant du terminal,
- n est un élément anti-rejeux choisi par le terminal,
- M est le montant de la transaction,
- KM est une clé de base ; kᵢ est la clé diversifiée du PME d'identifiant i.

Le schéma suivant illustre un mode de mise en oeuvre du procédé de l'invention. Les flèches indiquent les transferts d'information entre le terminal T et le PME.

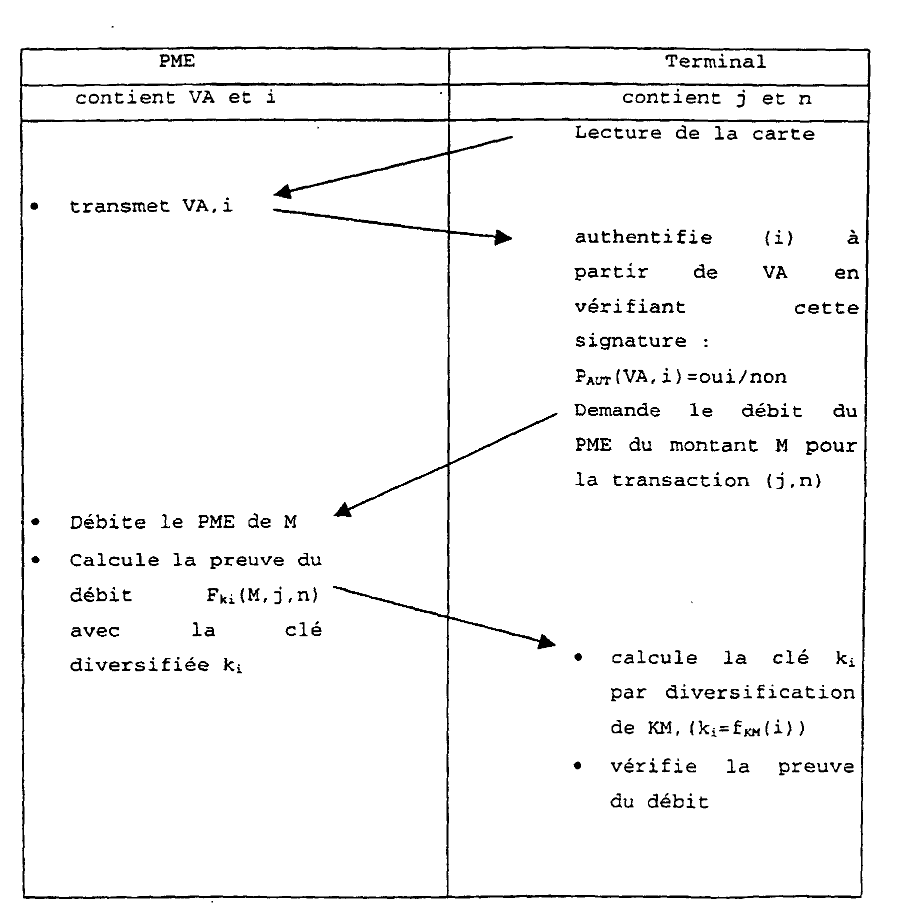

## Revendications

1. Procédé de transaction électronique sécurisée entre un objet (O) à débiter d'un certain montant (M) et un terminal (T) apte à commander ce débit et à vérifier que ce débit a bien été effectué, ce procédé étant **caractérisé en ce que** :
A) avant toute transaction :
- pour chaque objet défini par un certain identifiant (i), on calcule une valeur d'authentification (VA) qui est une signature numérique portant sur un identifiant de l'objet (i), cette signature étant produite en utilisant une clé privée (S_{AUT}) et peut être vérifiée à partir d'une clé publique (P_{AUT}), et on introduit ensuite cette valeur d'authentification (VA) dans l'objet (0),
- on introduit dans chaque terminal (T) la clé publique d'authentification (P_{AUT}),
- pour chaque objet (0) on détermine une clé diversifiée (kᵢ) à partir d'une clé de base (KM), en appliquant à l'identifiant (i) de l'objet un algorithme de diversification (f_{KM}) utilisant la clé de base, et l'on introduit cette clé diversifiée (kᵢ) dans l'objet (0),
B) pour chaque transaction :
- l'objet à débiter (0) transmet au terminal (T) son identifiant (i) et la valeur d'authentification (VA),
- le terminal (T) effectue un calcul cryptographique appliqué à la valeur d'authentification (VA) en utilisant la clé publique d'authentification (P_{AUT}(VA)=i),
- le terminal (T) transmet à l'objet (0) le montant et les paramètres de la transaction (M,j,n),
- l'objet (0) se débite dudit montant (M) et calcule une preuve de ce débit par une fonction cryptographique (F_{kᵢ}) ayant comme clé secrète sa clé diversifiée (kᵢ) et appliquée au montant (M) et aux paramètres de la transaction et transmet cette preuve (F_{kᵢ}(M,j,n)) au terminal (T),
- le terminal (T) calcule la clé diversifiée de l'objet (kᵢ) par une fonction cryptographique (f_{KM}) utilisant comme clé secrète la clé de base (KM) et appliquée à l'identifiant (i) de l'objet (0) (kᵢ=f_{KM}(i)), et vérifie la preuve du débit (F_{kᵢ}(M,j,n)) à l'aide de cette clé diversifiée.

2. Procédé selon la revendication 1, dans lequel l'identifiant (i) utilisé pour calculer la valeur d'authentification (VA) comprend notamment un numéro d'identification et éventuellement une période de validité (début et/ou fin).

3. Procédé selon la revendication 1, dans lequel l'objet (0) est un support du type porte-monnaie électronique, la transaction étant un paiement électronique.

4. Système de transaction électronique sécurisée comprenant un objet (O) à débiter d'un certain montant (M) et un terminal (T) apte à commander ce débit et à vérifier que ce débit a bien été effectué, ce système étant **caractérisé en ce que** :
- chaque objet (0) est défini par un certain identifiant (i), et contient une valeur d'authentification (VA) qui est une signature numérique portant sur l'identifiant (i) de l'objet (0), cette signature étant produite en utilisant une clé privée (S_{AUT}) et pouvant être vérifiée à partir d'une clé publique (P_{AUT}),
- chaque terminal (T) contient la clé publique d'authentification (P_{AUT}),
- chaque objet (0) contient une clé diversifiée (kᵢ) obtenue à partir d'une clé de base (KM) en appliquant à l'identifiant (i) de l'objet (0) un algorithme de diversification (f_{KM}) utilisant la clé de base,
- l'objet (0) à débiter contient des moyens aptes à transmettre au terminal (T) son identifiant (i) et la valeur d'authentification (VA),
- le terminal (T) contient des moyens aptes à effectuer un calcul cryptographique appliqué à la valeur d'authentification (VA) en utilisant la clé publique d'authentification (P_{AUT}(VA)=i),
- le terminal (T) contient des moyens aptes à transmettre à l'objet (0) le montant et les paramètres de la transaction (M,j,n),
- l'objet (0) contient des moyens aptes à débiter l'objet (0) dudit montant (M) et à calculer une preuve de ce débit par une fonction cryptographique (F_{kᵢ}) ayant comme clé secrète sa clé diversifiée (kᵢ) et appliquée au montant (M) et aux paramètres de la transaction et à transmettre cette preuve (F_{kᵢ} (M,j,n)) au terminal (T),
- le terminal (T) contient des moyens aptes à calculer la clé diversifiée de l'objet (kᵢ) par une fonction cryptographique (f_{KM}) utilisant comme clé secrète la clé de base (KM) et appliquée à l'identifiant (i) de l'objet (0) (kᵢ=f_{KM}(i)), et à vérifier la preuve du débit (F_{kᵢ}(M,j,n)) à l'aide de cette clé diversifiée.

5. Système selon la revendication 4, dans lequel l'objet (0) est un support du type porte-monnaie électronique.

## Patentansprüche

1. Gesichertes elektronisches Transaktionsverfahren zwischen einem mit einem bestimmten Betrag (M) zu belastenden Objekt (O) und einem Endgerät (T), das diese Belastung befehlen kann und das überprüfen kann, ob diese Belastung richtig ausgeführt wurde, wobei das Verfahren **dadurch gekennzeichnet ist, dass**:
A) vor jeder Transaktion:
- für jedes von einem bestimmten Identifizierer (i) definierte Objekt ein Authentifizierungswert (VA) berechnet wird, der eine numerische Signatur ist, die sich auf einen Identifizierer des Objekts (i) bezieht, wobei diese Signatur vorgenommen wird, indem ein Privatschlüssel (S_{AUT}) verwendet wird, und anhand eines öffentlichen Schlüssels (P_{AUT}) überprüft werden kann, und anschließend dieser Authentifizierungswert (VA) in das Objekt (O) eingegeben wird,
- in jedes Endgerät (T) der öffentliche Authentifizierungsschlüssel (P_{AUT}) eingegeben wird,
- für jedes Objekt (0) ein veränderlicher Schlüssel (kᵢ) ausgehend von einem Basisschlüssel (KM) festgelegt wird, indem auf den Identifizierer (i) des Objekts ein Diversifikationsalgorithmus (f_{KM}) unter Verwendung des Basisschlüssels angewandt wird und dieser diversifizierte Schlüssel (kᵢ) in das Objekt (O) eingegeben wird,
B) für jede Transaktion:
- das zu belastende Objekt (0) dem Endgerät (T) seinen Identifizierer (i) und den Authentifizierungswert (VA) übermittelt,
- das Endgerät (T) eine kryptographische Berechnung ausführt, die auf den Authentifizierungswert (VA) angewandt wird, wobei der öffentliche Authentifizierungsschlüssel (P_{AUT}(VA) = i) verwendet wird,
- das Endgerät (T) an das Objekt (0) den Betrag und die Parameter der Transaktion (M,j,n) überträgt,
- das Objekt (0) mit dem Betrag (M) belastet wird und einen Nachweis dieser Belastung durch eine kryptographische Funktion (Fₖᵢ) berechnet wird, die als Geheimschlüssel ihren diversifizierten Schlüssel (kᵢ) hat und auf den Betrag (M) und auf Parameter der Transaktion angewendet wird, und diesen Nachweis (Fₖᵢ (M,j,n)) dem Endgerät (T) übermittelt,
- das Endgerät (T) den diversifizierten Schlüssel des Objekts (kᵢ) durch eine kryptographische Funktion (f_{KM}) berechnet, wobei es als Geheimschlüssel den Basisschlüssel (KM) verwendet, der auf den Identifizierer (i) des Objekts (O) (kᵢ = f_{KM}(i)) angewendet wird, und wobei der Belastungsnachweis (Fₖᵢ (M,j,n)) mit Hilfe dieses diversifizierten Schlüssels überprüft wird.

2. Verfahren nach Anspruch 1, wobei der zum Berechnen des Authentifizierungswerts (VA) verwendete Identifizierer (i) insbesondere eine Identifizierungsnummer und eventuell eine Gültigkeitsdauer (Anfang und/oder Ende) umfasst.

3. Verfahren nach Anspruch 2, wobei das Objekt (0) ein Träger von der Art einer elektronischen Geldbörse und die Transaktion eine elektronische Bezahlung ist.

4. Sicheres elektronisches Transaktionssystem mit einem mit einem bestimmten Betrag (M) zu belastenden Objekt (O) und einem Endgerät (T), das diese Belastung befehlen kann und das überprüfen kann, ob diese Belastung richtig ausgeführt wurde, wobei dieses System **dadurch gekennzeichnet ist, dass**:
- jedes Objekt (O) von einem bestimmten Identifizierer (i) definiert ist und einen Authentifizierungswert (VA) enthält, der eine numerische Signatur ist, die sich auf einen Identifizierer (i) des Objekts (O) bezieht, wobei diese Signatur vorgenommen wird, indem ein Privatschlüssel (S_{AUT}) verwendet wird, und anhand eines öffentlichen Schlüssels (P_{AUT}) überprüft werden kann,
- jedes Endgerät (T) den öffentlichen Authentifizierungsschlüssel (P_{AUT}) enthält,
- jedes Objekt (0) eines veränderlichen Schlüssels (kᵢ) enthält, der auf der Basis eines Basisschlüssels (KM) erhalten wird, indem auf den Identifizierer (i) des Objekts (O) ein Diversifikationsalgorithmus (f_{KM}) unter Verwendung des Basisschlüssels angewandt wird,
- das zu belastende Objekt (0) Mittel enthält, die seinen Identifizierer (i) und seinen Authentifizierungswert (VA) an das Endgerät (T) übermitteln können,
- das Endgerät (T) Mittel enthält, die eine kryptographische Berechnung ausführen können, die auf den Authentifizierungswert (VA) angewandt wird, indem der öffentliche Authentifizierungsschlüssel (P_{AUT} (VA) = i) verwendet wird,
- das Endgerät (T) Mittel enthält, die an das Objekt (O) den Betrag und die Parameter der Transaktion (M,j,n) übertragen können,
- das Objekt (0) Mittel enthält, die das Objekt (O) mit dem Betrag (M) belasten und einen Nachweis dieser Belastung durch eine kryptographische Funktion (Fₖᵢ) berechnen können, die als Geheimschlüssel ihren diversifizierten Schlüssel (kᵢ) hat und die den Betrag (M) und auf Parameter der Transaktion angewendet wird, und die diesen Nachweis (Fₖᵢ (M,j,n)) dem Endgerät (T) übermitteln können,
- das Endgerät (T) Mittel enthält, die den diversifizierten Schlüssel des Objekts (kᵢ) durch eine kryptographische Funktion (f_{KM}) berechnen können, wobei als Geheimschlüssel der Basisschlüssel (KM), verwendet und auf den Identifizierer (i) des Objekts (O) (kᵢ = f_{KM}(i)) angewendet wird, und den Belastungsnachweis (Fₖᵢ (M,j,n)) mit Hilfe dieses diversifizierten Schlüssels überprüfen kann.

5. System nach Anspruch 4, wobei das Objekt (0) ein Träger von der Art einer elektronischen Geldbörse ist.

## Claims

1. Secure electronic transaction process between an object (O) to be debited by a certain amount (M) and a terminal (T) that can control this debit and check that the debit has actually been made, this process being **characterized in that**:
A) before any transaction:
- for each object defined by a certain identifier (i), an authentication value (VA) is calculated which is a digital signature applicable to an identifier of the object (i), this signature being produced using a private key (S_{AUT}) and can be checked from a public key (P_{AUT}) and this authentication value (VA) is then inserted into the object (O),
- the public authentication key (P_{AUT}) is input into each terminal (T),
- for each object (O), a diversified key (kᵢ) is determined from a base key (KM) by applying a diversification algorithm (f_{KM}) to the identifier (i) of the object using the base key, and this diversified key (kᵢ) is input into the object (O),
B) for each transaction:
- the object to be debited (O) sends its identifier (i) to the terminal (T) together with the authentication value (VA),
- the terminal (T) makes a cryptographic calculation applied to the authentication value (VA), using the public authentication key (P_{AUT} (VA) = i),
- the terminal (T) sends the amount and parameters of the transaction (M, j, n) to the object (O),
- the object (O) is debited by the said amount (M) and calculates a proof of this debit using a cryptographic function (Fₖᵢ) with the diversified key as a secret key applied to the amount (M) and to the parameters of the transaction and transmits this proof (Fₖᵢ (M, j, n)) to the terminal (T),
- the terminal (T) calculates the diversified key of the object (kᵢ) using a cryptographic function (f_{KM}) using the base key (KM) as a secret key and applied to the identifier (i) of the object (O) (kᵢ=f_{KM}(i)) and verifies the proof of the debit (Fₖᵢ (M, j, n)) using this diversified key.

2. Process according to claim 1, in which the identifier (i) used to calculate the authentication value (VA) comprises an identification number and possibly a validity period (start and/or end).

3. Process according to claim 1, in which the object (O) is an electronic wallet type support, the transaction being an electronic payment.

4. Secure electronic transaction system comprising an object (O) to be debited by a certain amount (M) and a terminal (T) that can control this debit and check that this debit has actually been made, this system being **characterized in that**:
- each object (O) is defined by a given identifier (i), and contains an authentication value (VA) that is a digital signature applicable to the identifier (i) of the object (O), this signature being produced using a private key (S_{AUT}) and can be checked using a public key (P_{AUT}),
- each terminal (T) contains the public authentication key (P_{AUT}),
- each object (O) contains a diversified key (kᵢ) obtained from a base key (KM) by applying a diversification algorithm (f_{KM}) to the identifier (i) of the object (O), using the base key,
- the object (O) to be debited contains means capable of transmitting its identifier (i) and the authentication value (VA) to the terminal (T),
- the terminal (T) contains means capable of making a cryptographic calculation applied to the authentication value (VA) using the public authentication key (P_{AUT}(VA) = i),
- the terminal (T) contains means capable of transmitting the transaction amount and parameters (M, j, n), to the object (O),
- the object (O) contains means capable of debiting the object (O) by the said amount (M) and calculating proof of this debit by a cryptographic function (Fₖᵢ) with its diversified key (kᵢ) as the secret key and applied to the transaction amount (M) and parameters, and transmitting this proof (Fₖᵢ (M, j, n)) to the terminal (T),
- the terminal (T) contains means capable of calculating the diversified key (kᵢ) of the object by a cryptographic function (f_{KM}) using the base key (KM) as a secret key applied to the identifier (i) of the object (O) and verifying the proof of the debit (Fₖᵢ (M, j, n)) using this diversified key.

5. System according to claim 4, in which the object (O) is an electronic wallet type support.
